(19) Europäisches Patentamt / European Patent Office / Office européen des brevets

(11) **EP 4 502 062 A1**

(12) **EUROPEAN PATENT APPLICATION**
published in accordance with Art. 153(4) EPC

(43) Date of publication:
**05.02.2025   Bulletin 2025/06**

(21) Application number: **23781412.4**

(22) Date of filing: **30.03.2023**

(51) International Patent Classification (IPC):
**C08L 67/04** *(2006.01)*        **C08G 63/06** *(2006.01)*

(52) Cooperative Patent Classification (CPC):
**C08G 63/06; C08G 63/16; C08L 67/02; C08L 67/04**

(86) International application number:
**PCT/KR2023/004317**

(87) International publication number:
**WO 2023/191561 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:   **30.03.2022   KR 20220039988**

(71) Applicant: **CJ CheilJedang Corporation**
**Seoul 04560 (KR)**

(72) Inventors:
• **HWANG, Jiho**
  **Seoul 04560 (KR)**
• **LEE, Changsuk**
  **Seoul 04560 (KR)**
• **KIM, Jeong Hyun**
  **Seoul 04560 (KR)**
• **JANG, Robin**
  **Seoul 04560 (KR)**
• **YOON, Ki Chull**
  **Seoul 04560 (KR)**

(74) Representative: **Dehns**
**10 Old Bailey**
**London EC4M 7NG (GB)**

(54) **POLYBUTYLENE SUCCINATE (PBS)-BASED RESIN VAPORIZATION PROMOTER AND COMPOSITION COMPRISING SAME**

(57)   An embodiment of the present disclosure relates to: a composition comprising a polybutylene succinate (PBS)-based resin in an amount ranging from 10 wt% to less than 100 wt% based on the total weight of the composition, wherein, when the cumulative amount of carbon dioxide ($CO_2$) generated after 12 weeks at 30 °C is measured, the degree of vaporization ($V_{10w}$) is 20% or greater; and a PBS-based resin vaporization promoter for promoting the vaporization of the PBS-based resin.

The PBS-based resin vaporization promoter can significantly accelerate the vaporization of a PBS-based resin having a low degree of vaporization at room temperature, i.e., 30 °C, thereby improving the biodegradability of the PBS-based resin. Thus, the composition comprising same can be used in various fields and can effectively contribute to environmental preservation while exhibiting excellent physical properties.

EP 4 502 062 A1

## Description

**Technical Field**

The present disclosure relates to a vaporization promotor that promotes the vaporization of a polybutylene succinate (PBS)-based resin and to a composition comprising the same.

**Background Art**

General-purpose plastics currently commercialized have excellent physical properties, and demand is increasing due to stable supply and price. However, the problem of disposing of waste plastic is emerging throughout life. Since they do not decompose in natural conditions such as the ocean and soil, they are becoming a factor causing serious environmental pollution problems.

In order to solve these environmental pollution problems, studies on biodegradable plastics have been actively conducted in recent years.

Biodegradable plastic refers to a material that is decomposed into low-molecular-weight substances by microorganisms existing in nature and ultimately decomposed into water and carbon dioxide, or water and methane gas.

The polymer resin typically used as such biodegradable plastic is a polylactic acid (PLA) resin. In recent years, research using polybutylene succinate (PBS)-based resins, such as polybutylene succinate (PBS), polybutylene succinate adipate (PBSA), and polybutylene succinate terephthalate (PBST), which have better decomposition rates and moldability than those of PLA resins, has been actively conducted.

However, these PBS-based resins actually require a long period of time to be decomposed. In particular, complete biodegradation is difficult in natural conditions such as the ocean and soil, and there are still limitations in enhancing the decomposition rate under room temperature conditions.

**Disclosure of Invention**

**Technical Problem**

The present disclosure is devised to solve the problems of the prior art discussed above.

The present disclosure aims to provide a vaporization promotor for a polybutylene succinate (PBS)-based resin to enhance the degree of vaporization of the polybutylene succinate (PBS)-based resin, which has a low degree of vaporization at room temperature of 30°C, thereby accelerating the biodegradation effect (rate) of the polybutylene succinate (PBS)-based resin even at room temperature, and a composition comprising the same.

**Solution to the Problem**

According to an aspect of the present disclosure, there is provided a composition that comprises a polybutylene succinate (PBS)-based resin in an amount ranging from 10% by weight to less than 100% by weight based on the total weight of the composition, wherein when the cumulative amount of carbon dioxide ($CO_2$) generated over 12 weeks at 30°C is measured in accordance with ISO 14855, the degree of vaporization ($V_{10w}$) represented by the following Equation 1 is 20% or more:

[Equation 1]

$$V_{10w}\ (\%) = \frac{(CO_2)_S - (CO_2)_B}{(CO_2)_{THV}} \times 100$$

In Equation 1, $(CO_2)_S$ is the cumulative amount (g) of carbon dioxide ($CO_2$) generated in a test container containing compost and a sample in an amount of 14.3% by weight based on the total dry weight of the sample and the compost, $(CO_2)_B$ is the cumulative amount (g) of carbon dioxide ($CO_2$) generated in an inoculum container containing compost alone, and $(CO_2)_{THV}$ is the theoretical cumulative amount of carbon dioxide ($CO_2$) generated in the test container and represented by the following Equation 2,

[Equation 2]

$$(CO_2)_{THV}\,(g) = Cw \times \frac{44}{12}$$

In Equation 2, Cw is the mass (g) of organic carbon contained in the sample.

In an embodiment, the composition may further comprise a vaporization promotor for a polybutylene succinate (PBS)-based resin.

In another embodiment, the weight ratio of the polybutylene succinate (PBS)-based resin and the vaporization promotor for a polybutylene succinate (PBS)-based resin may be 10:90 to 90:10.

In another embodiment, the composition may have a degree of improvement in vaporization promotion ($\Delta VID_{10W}$) of 0.1% or more as represented by the following Equation 3:

[Equation 3]

$$\Delta VID_{10W}\,(\%) = V_{10w} - V_{THV10w}$$

In Equation 3, $V_{10w}$ is as defined above, and $V_{THV10w}$ is represented by the following Equation 4,

[Equation 4]

$$V_{THV10w}\,(\%) = 3\% \times \frac{x}{100\%\ by\ weight} + 97\% \times \frac{(100-x)}{100\%\ by\ weight}$$

In Equation 4, x is the weight percent of the polybutylene succinate (PBS)-based resin contained in the composition based on the total weight of the composition.

In another embodiment, the vaporization promotor for a polybutylene succinate (PBS)-based resin may satisfy at least one of the following characteristics: a glass transition temperature (Tg) of -45°C to 80°C, a crystallization temperature (Tc) of 60°C to 120°C, and a melting temperature (Tm) of 100°C to 170°C.

In another embodiment, the polybutylene succinate (PBS)-based resin may comprise at least one selected from the group consisting of polybutylene succinate (PBS), polybutylene succinate adipate (PBSA), and polybutylene succinate terephthalate (PBST), and the vaporization promotor for a polybutylene succinate (PBS)-based resin may comprise a resin comprising a repeat unit derived from 4-hydroxybutyrate (4-HB) monomer; and a repeat unit derived from at least one monomer selected from the group consisting of 3-hydroxybutyrate (3-HB), 3-hydroxypropionate (3-HP), 3-hydroxyvalerate (3-HV), 3-hydroxyhexanoate (3-HH), 4-hydroxyvalerate (4-HV), 5-hydroxyvalerate (5-HV), and 6-hydroxyhexanoate (6-HH).

In another embodiment, the vaporization promotor for a polybutylene succinate (PBS)-based resin may comprise a resin comprising a repeat unit derived from a 3-hydroxybutyrate (3-HB) monomer; and a repeat unit derived from a 4-hydroxybutyrate (4-HB) monomer.

In another embodiment, the resin may comprise the repeat unit derived from a 4-hydroxybutyrate (4-HB) monomer in an amount ranging from 1% by mole to 80% by mole based on the total moles of the repeat unit derived from a 3-hydroxybutyrate (3-HB) monomer and the repeat unit derived from a 4-hydroxybutyrate (4-HB) monomer.

According to another aspect of the present disclosure, there is provided a vaporization promotor for a polybutylene succinate (PBS)-based resin, which comprises a resin comprising a repeat unit derived from a 3-hydroxybutyrate (3-HB) monomer; and a repeat unit derived from a 4-hydroxybutyrate (4-HB) monomer.

In an embodiment, the molar ratio of the repeat unit derived from a 3-hydroxybutyrate (3-HB) monomer to the repeat unit derived from a 4-hydroxybutyrate (4-HB) monomer, contained in the resin, may be 40:60 to 99:1.

**Advantageous Effects of Invention**

The composition according to an embodiment of the present disclosure comprises a polybutylene succinate (PBS)-based resin with a low degree of vaporization at room temperature of 30°C, wherein when the cumulative amount of carbon dioxide ($CO_2$) generated over 12 weeks is measured, the degree of vaporization is at a specific level or more, thereby achieving an excellent biodegradation effect at room temperature.

In addition, the vaporization promotor for a polybutylene succinate (PBS)-based resin can significantly accelerate the vaporization of a polybutylene succinate (PBS)-based resin, which has a low degree of vaporization at room temperature of 30°C.

Accordingly, the composition and the vaporization promotor for a polybutylene succinate (PBS)-based resin can be used in various fields to effectively preserve the environment, along with excellent physical properties.

**Best Mode for Carrying out the Invention**

Hereinafter, the present disclosure will be described in detail with reference to the embodiments. Here, the embodiments are not limited to those described below. Rather, they can be modified into various forms as long as the gist of the invention is not altered.

Throughout the present specification, when a part is referred to as "comprising" an element, it is understood that other elements may be comprised, rather than other elements are excluded, unless specifically stated otherwise.

In addition, all numbers expressing the physical properties, dimensions, and the like of elements used herein are to be understood as being modified by the term "about" unless otherwise indicated.

The present disclosure relates to a composition (vaporizable composition or biodegradable composition), in which the degree of vaporization ($V_{10w}$) calculated by applying the cumulative amount of carbon dioxide ($CO_2$) generated under aerobic composting conditions is controlled to a specific range or more, so that it can be easily biodegraded at room temperature (e.g., $25 \pm 5°C$) even if it comprises a polybutylene succinate (PBS)-based resin, which is difficult to biodegrade at room temperature (e.g., $25 \pm 5°C$), and to a vaporization promotor for a polybutylene succinate (PBS)-based resin contained in the composition, which will be described in detail, as follows.

**[Composition]**

The composition according to an embodiment of the present disclosure comprises a polybutylene succinate (hereinafter, referred to as "PBS")-based resin in an amount ranging from 10% by weight to less than 100% by weight based on the total weight of the composition, wherein when the cumulative amount of carbon dioxide ($CO_2$) generated over 12 weeks at 30°C is measured in accordance with ISO 14855, the degree of vaporization ($V_{10w}$) represented by the following Equation 1 is 20% or more:

[Equation 1]

$$V_{10w}\ (\%) = \frac{(CO_2)_S - (CO_2)_B}{(CO_2)_{THV}} \times 100$$

In Equation 1, $(CO_2)_S$ is the cumulative amount (g) of carbon dioxide ($CO_2$) generated in a test container containing compost and a sample (composition sample) in an amount of 14.3% by weight based on the total dry weight of the sample and the compost, $(CO_2)_B$ is the cumulative amount (g) of carbon dioxide ($CO_2$) generated in an inoculum container containing compost alone, and $(CO_2)_{THV}$ is the theoretical cumulative amount (g) of carbon dioxide ($CO_2$) generated in the test container (test container (a + b) containing compost (a) and the sample (b) in an amount of 14.3% by weight of the total dry weight of the sample and compost (dry weight of the sample + dry weight of the compost)) and represented by the following Equation 2,

[Equation 2]

$$(CO_2)_{THV}\ (g) = Cw \times \frac{44}{12}$$

In Equation 2, Cw is the mass (g) of organic carbon (carbon element) contained in the sample (sample in an amount of 14.3% by weight of the total weight (x + y) of the dry weight of the sample (x) and the dry weight of the compost (y)). Specifically, Cw refers to the content (g) of carbon elements measured when elemental analysis of the sample is carried out.

The weights of compost used for measuring $(CO_2)_S$ and $(CO_2)_B$ may be the same. In addition, the dry weight of compost may be calculated through loss on drying (LOD), which is a thermogravimetric measurement principle of moisture. That is, the difference in weight loss is measured when compost is dried, and the dry weight may be calculated through moisture analysis using a drying oven or a halogen moisture analyzer (HMA).

The degree of vaporization ($V_{10w}$) is a value measured when the composition is decomposed into low-molecular-weight substances and ultimately completely decomposed into carbon dioxide and vaporized, rather than the degree of biodisintegration (biodisintegration effect) in which the composition decomposes into small pieces or molecules.

Specifically, the degree of vaporization ($V_{10w}$) is a value obtained by measuring the cumulative amount of carbon

dioxide ($CO_2$) generated, which is the final decomposition product of the composition, according to the ISO 14855 notification regulations (specifically, the aerobic biodegradability evaluation method of ISO14855-1), and applying the cumulative amount of carbon dioxide ($CO_2$) measured to Equations 1 and 2, which may be an indicator of the degree of biodegradation of the composition at room temperature of 30°C.

The composition according to an embodiment of the present disclosure may further comprise a vaporization promotor for a polybutylene succinate (PBS)-based resin (hereinafter, referred to as "vaporization promotor for a PBS-based resin"). Specifically, the composition further comprising the vaporization promotor for a PBS-based resin may have a degree of vaporization ($V_{10w}$) represented by Equation 1 of 20% or more. More specifically, the degree of vaporization ($V_{10w}$) may be an indicator of the degree of biodegradation of the composition comprising the PBS-based resin and the vaporization promotor for a PBS-based resin.

That is, the degree of vaporization ($V_{10w}$) may be a value obtained by the following procedure: as an evaluation group, a composition sample comprising the PBS-based resin and the vaporization promotor for a PBS-based resin at a specific content ratio is mixed with compost and placed in a test container, and the cumulative amount (g) (($CO_2$)$_S$) of carbon dioxide ($CO_2$) generated from the composition sample is then measured at 30°C under aerobic compost conditions over 12 weeks using a measurement and evaluation device (Respirometer equipment of ECHO); as a control group, the cumulative amount (g) (($CO_2$)$_B$) of carbon dioxide ($CO_2$) generated in an inoculum container containing compost alone without the composition sample is obtained under the same conditions as the evaluation group; the difference between (($CO_2$)$_S$ and (($CO_2$)$_B$ is measured, which are the cumulative amounts (g) of carbon dioxide ($CO_2$) generated in the evaluation group and the control group, respectively; and this is divided by the theoretical cumulative amount (g) (($CO_2$)$_{THV}$) of carbon dioxide ($CO_2$) generated as represented by Equation 2 and converted into a percentage.

The composition according to an embodiment of the present disclosure comprises a PBS-based resin and has a degree of vaporization ($V_{10w}$) at a specific level or more when the cumulative amount of carbon dioxide ($CO_2$) generated over 12 weeks is measured; thus, it can produce an excellent biodegradation effect at room temperature of 30°C under aerobic compost conditions even if it comprises a PBS-based resin with a low degree of vaporization. The pressure condition in the aerobic compost conditions may be normal pressure.

Specifically, the degree of vaporization ($V_{10w}$) of the composition according to an embodiment of the present disclosure may be, for example, 25% or more, 30% or more, 35% or more, 40% or more, 45% or more, 48% or more, 50% or more, 55% or more, 60% or more, or 65% or more (e.g., 20% to 80%, 25% to 75%, 30% to 70%, or 40% to 69%).

Meanwhile, (($CO_2$)$_S$ in Equation 1 may be, for example, 5 g or more, 10 g or more, 20 g or more, 30 g or more, 35 g or more, 40 g or more, 45 g or more, 50 g or more, 55 g or more, or 60 g or more. In addition, (($CO_2$)$_S$ may be, for example, 65 g or less, 63 g or less, 60 g or less, 58 g or less, or 55 g or less.

The difference between (($CO_2$)$_S$ and (($CO_2$)$_B$ in Equation 1 refers to the actual cumulative amount of carbon dioxide ($CO_2$) generated by the sample (composition sample) itself and may be, for example, 1 g or more, 2 g or more, 3 g or more, 5 g or more, or 10 g or more. In addition, the difference between (($CO_2$)$_S$ and (($CO_2$)$_B$ may be, for example, 80 g or less, 70 g or less, 60 g or less, 50 g or less, 40 g or less, or 30 g or less.

(($CO_2$)$_{THV}$ in Equation 1 refers to the theoretical maximum cumulative amount (g) of carbon dioxide ($CO_2$) generated when the sample (composition sample) is completely oxidized (when the organic carbon contained in the sample is 100% converted to carbon dioxide ($CO_2$)) in a test container containing compost and the sample, which may be represented by Equation 2. That is, (($CO_2$)$_{THV}$ may be the product of the mass ($Cw$) of organic carbon (carbon atoms) contained in the sample and the ratio (44/12) of the molecular weight of carbon dioxide (44) and the atomic weight of a carbon atom (12). (($CO_2$)$_{THV}$ may be, for example, 5 g or more, 6 g or more, 7 g or more, 10 g or more, 15 g or more, 20 g or more, 30 g or more, 40 g or more, or 50 g or more. In addition, (($CO_2$)$_{THV}$ may be, for example, 80 g or less, 70 g or less, 60 g or less, 55 g or less, 50 g or less, 45 g or less, or 42 g or less.

Meanwhile, the composition according to an embodiment of the present disclosure may have a degree of improvement in vaporization promotion ($\Delta VID_{10W}$) of 0.1% or more as represented by the following Equation 3:

$$[\text{Equation 3}]$$

$$\Delta VID_{10W} (\%) = V_{10w} - V_{THV10w}$$

In Equation 3, $V_{10w}$ is as defined above, and $V_{THV10w}$ is represented by the following Equation 4,

$$[\text{Equation 4}]$$

$$V_{THV10w} (\%) = 3\% \times \frac{x}{100\% \, by \, weight} + 97\% \times \frac{(100 - x)}{100\% \, by \, weight}$$

In Equation 4, x is the weight percent of the PBS-based resin contained in the composition based on the total weight of the composition. Meanwhile, in Equation 4, 3% refers to the degree of vaporization ($V_{10w}$) (%) calculated by Equation 1 when the cumulative amount of carbon dioxide ($CO_2$) generated over 12 weeks at 30°C in accordance with ISO 14855 for a composition composed of 100% by weight of a PBS-based resin (composition with a PBS-based resin alone), and 97% refers to the degree of vaporization ($V_{10w}$) (%) calculated by Equation 1 when the cumulative amount of carbon dioxide ($CO_2$) generated over 12 weeks at 30°C in accordance with ISO 14855 for a composition composed of 100% by weight of a vaporization promotor for a PBS-based resin (composition with a vaporization promotor for a PBS-based resin alone).

The degree of improvement in vaporization promotion ($\Delta VID_{10W}$) is a value ($V_{10w}$ - $V_{THV10w}$) obtained by subtracting the theoretical degree of vaporization ($V_{THV10w}$) of the composition from the degree of vaporization of the composition actually measured ($V_{10w}$), which may be an indicator of the degree to which the vaporization of the PBS-based resin is promoted by the vaporization promotor for a PBS-based resin.

The degree of improvement in vaporization promotion ($\Delta VID_{10W}$) may be, for example, 0.2% or more, 0.3% or more, 0.5% or more, 0.6% or more, 0.7% or more, 0.8% or more, 1% or more, 2% or more, 3% or more, 5% or more, 10% or more, 12% or more, 13% or more, 15% or more, 20% or more, 22% or more, 23% or more, 24% or more, 25% or more, 30% or more, 33% or more, or 35% or more. In addition, the degree of improvement in vaporization promotion ($\Delta VID_{10W}$) may be, for example, 50% or less, 48% or less, 46% or less, 45% or less, 43% or less, 40% or less, or 38% or less.

This degree of improvement in vaporization promotion ($\Delta VID_{10W}$) may vary depending on the content or physical properties of the PBS-based resin contained in the composition, or it may vary depending on the content, components, or physical properties of the vaporization promotor for a PBS-based resin contained in the composition.

Meanwhile, in Equation 3, the theoretical degree of vaporization ($V_{THV10w}$) of the composition may vary depending on the content (weight) of the PBS-based resin and the vaporization promotor for a PBS-based resin contained in the composition. Specifically, the theoretical degree of vaporization ($V_{THV10w}$) may be, for example, 1% or more, 2% or more, 3% or more, 5% or more, 6% or more, 7% or more, 8% or more, 10% or more, 15% or more, or 20% or more, and 90% or less, 80% or less, 70% or less, 65% or less, 55% or less, 45% or less, 40% or less, or 35% or less.

When the composition according to an embodiment of the present disclosure is compared with cellulose, a representative standard biodegradable material, in terms of the degree of vaporization, it may have a degree of vaporization ($V_{10w}$) equivalent to, or higher than, the degree of vaporization of cellulose.

Specifically, the composition according to an embodiment of the present disclosure comprises a PBS-based resin with a low degree of vaporization at room temperature of 30°C, wherein when the cumulative amount of carbon dioxide ($CO_2$) generated over 12 weeks is measured, the degree of vaporization ($V_{10w}$) is at a specific level or more (e.g., 20% or more), thereby producing an excellent biodegradation effect at room temperature.

Accordingly, the composition according to an embodiment of the present disclosure can be used in various fields to effectively preserve the environment, along with excellent physical properties.

Hereinafter, each component of the composition according to an embodiment of the present disclosure will be described in detail.

Polybutylene succinate (PBS)-based resin

The composition according to an embodiment of the present disclosure may comprise a PBS-based resin.

The PBS-based resin is a representative polycondensed aliphatic polyester, or aliphatic-aromatic polyester, and is a thermally resistant polymer with a relatively higher melting point than those of other polyesters synthesized from dihydric alcohol and dihydric acid.

Specifically, the PBS-based resin may be synthesized by an esterification reaction of 1,4-butanediol (1,4-BDO) and succinic acid and a transesterification reaction (polycondensation reaction) of the oligomer obtained by the esterification reaction.

The PBS-based resin may comprise at least one selected from the group consisting of polybutylene succinate (PBS), a binary copolymer of 1,4-butanediol (1,4-BDO) and succinic acid; polybutylene succinate adipate (PBSA), a ternary copolymer of 1,4-butanediol (1,4-BDO), succinic acid, and adipic acid; and polybutylene succinate terephthalate (PBST), a quaternary copolymer of 1,4-butanediol (1,4-BDO), succinic acid, adipic acid, and terephthalic acid or dimethyl terephthalate.

The PBS-based resin may have a weight average molecular weight (Mw) of about 100,000 to 500,000 g/mole, about 120,000 to 500,000 g/mole, about 150,000 to 450,000 g/mole, about 150,000 to 430,000 g/mole, or about 150,000 to 400,000 g/mole. The weight average molecular weight (Mw) may be measured by gel permeation chromatography (GPC).

The composition according to an embodiment of the present disclosure may comprise the PBS-based resin in an amount of 10% by weight to less than 100% by weight based on the total weight of the composition.

Specifically, the composition may comprise the PBS-based resin in an amount of 10% by weight or more, 20% by weight or more, 30% by weight or more, 40% by weight or more, 50% by weight or more, 60% by weight or more, 70% by weight or more, 80% by weight or more, or 90% by weight or more, and less than 100% by weight, 98% by weight or less, 95% by weight or less, 93% by weight or less, 92% by weight or less, or 90% by weight or less, based on the total weight of the composition. For example, the composition may comprise the PBS-based resin in an amount of 10% by weight to 99% by weight, 20% by weight to 97% by weight, 30% by weight to 95% by weight, 40% by weight to 93% by weight, 50% by weight to 92% by weight, 60% by weight to 91% by weight, or 70% by weight to 90% by weight, based on the total weight of the composition.

When the cumulative amount of carbon dioxide ($CO_2$) generated over 12 weeks at 30°C in accordance with ISO 14855 for a composition composed of 100% by weight of the PBS-based resin is measured, the degree of vaporization ($V_{10w}$) calculated by Equation 1 may be significantly low.

Accordingly, the composition according to an embodiment of the present disclosure further comprises a vaporization promotor for a PBS-based resin described below, thereby accelerating the vaporization of a PBS-based resin, which has a low degree of vaporization at room temperature, resulting in a further enhanced biodegradation effect.

Vaporization promotor for a polybutylene succinate (PBS)-based resin

The composition according to an embodiment of the present disclosure may further comprise a vaporization promotor for a PBS-based resin.

The vaporization promotor for a PBS-based resin can serve as a promotor that can accelerate the vaporization of a PBS-based resin with a low degree of vaporization at room temperature of 30°C.

The composition according to an embodiment of the present disclosure may comprise the vaporization promotor for a PBS-based resin in an amount of greater than 0% by weight, 1% by weight or more, 2% by weight or more, 3% by weight or more, 4% by weight or more, 5% by weight or more, 10% by weight or more, 20% by weight or more, or 30% by weight or more, and less than 100% by weight, 90% by weight or less, 80% by weight or less, 70% by weight or less, 60% by weight or less, 50% by weight or less, 40% by weight or less, or 30% by weight or less, based on the total weight of the composition. For example, the composition may comprise the vaporization promotor for a PBS-based resin in an amount of 1% by weight to 90% by weight, 3% by weight to 80% by weight, 5% by weight to 70% by weight, 7% by weight to 60% by weight, 8% by weight to 50% by weight, 9% by weight to 40% by weight, or 10% by weight to 30% by weight, based on the total weight of the composition.

When the content of the vaporization promotor for a PBS-based resin satisfies the above range, the vaporization of the PBS-based resin is efficiently accelerated, so that the composition according to an embodiment of the present disclosure can produce an excellent biodegradation effect at room temperature of 30°C even if it comprises the PBS-based resin in an amount of 10% by weight or more, 20% by weight or more, 40% by weight or more, 60% by weight or more, 70% by weight or more, 80% by weight or more, or 90% by weight or more.

The vaporization promotor for a PBS-based resin may comprise a polyhydroxyalkanoate (hereinafter, referred to as "PHA") resin. Since the PHA resin has specific physical properties (e.g., specific crystal structure, components derived from specific monomers, and the like), it can efficiently promote the vaporization of the PBS-based resin.

The PHA resin has physical properties similar to those of synthetic resins such as polybutylene succinate (PBS), polybutylene succinate terephthalate (PBST), and polybutylene succinate adipate (PBSA), while it exhibits complete biodegradability and is excellent in biocompatibility.

Specifically, the PHA resin is a natural thermoplastic polyester polymer that accumulates in microbial cells. Since it has biodegradability, it can be composted and finally decomposed into carbon dioxide, water, and organic waste without generating toxic waste. In particular, the PHA resin is biodegradable in soil and sea. Thus, when the composition according to an embodiment of the present disclosure comprises the PHA resin, it is biodegradable under any environmental conditions, such as soil and sea, and is environmentally friendly.

For example, when the cumulative amount of carbon dioxide ($CO_2$) generated over 12 weeks at 30°C is measured in accordance with ISO 14855 for a composition composed of 100% by weight of the PHA resin, the degree of vaporization ($V_{10w}$) calculated by Equation 1 may be, for example, 90% or more, 91% or more, 91.5% or more, 92% or more, 93.5% or more, 95% or more, or 97% or more, thereby producing a significantly excellent biodegradation effect at room temperature.

The PHA resin may be formed by an enzyme-catalyzed polymerization of one or more monomers in living cells.

Specifically, the PHA resin may be a copolymeric polyhydroxyalkanoate resin (hereinafter, referred to as a "PHA copolymer"), more specifically, a copolymer in which repeat units derived from two or more different monomers are randomly distributed in the polymer chain. In addition, the PHA resin may comprise isomers. For example, the PHA resin may comprise structural isomers, enantiomers, or geometric isomers. Specifically, the PHA resin may comprise structural isomers.

Examples of monomers that may be used in the preparation of the PHA include, specifically, 2-hydroxybutyrate, lactic acid, glycolic acid, 3-hydroxybutyrate (hereinafter, referred to as "3-HB"), 3-hydroxypropionate (hereinafter, referred to as "3-HP"), 3-hydroxyvalerate (hereinafter, referred to as "3-HV"), 3-hydroxyhexanoate (hereinafter, referred to as "3-HH"), 3-hydroxyheptanoate (hereinafter, referred to as "3-HHep"), 3-hydroxyoctanoate (hereinafter, referred to as "3-HO"), 3-hydroxynonanoate (hereinafter, referred to as "3-HN"), 3-hydroxydecanoate (hereinafter, referred to as "3-HD"), 3-hydroxydodecanoate (hereinafter, referred to as "3-HDd"), 4-hydroxybutyrate (hereinafter, referred to as "4-HB"), 4-hydroxyvalerate (hereinafter, referred to as "4-HV"), 5-hydroxyvalerate (hereinafter, referred to as "5-HV"), and 6-hydroxyhexanoate (hereinafter, referred to as "6-HH"). The PHA resin may contain a repeat unit derived from one or more monomers selected from the above.

Specifically, the PHA resin may comprise a repeat unit (at least one repeat unit) derived from one or more monomers selected from the group consisting of 3-HB, 4-HB, 3-HP, 3-HV, 3-HH, 4-HV, 5-HV, and 6-HH.

More specifically, the PHA resin may comprise a repeat unit derived from a 4-HB monomer. That is, the PHA resin may be a PHA copolymer comprising a repeat unit derived from a 4-HB monomer.

The PHA resin may be a PHA copolymer that comprises a repeat unit derived from a 4-HB monomer and further comprises a repeat unit derived from a monomer different from the 4-HB monomer, or further comprises repeat units (2 or more repeat units different from each other) derived from two, three, four, five, six, or more monomers different from each other.

Specifically, the vaporization promotor for a PBS-based resin according to an embodiment of the present disclosure may comprise a resin (PHA copolymer) that comprises a repeat unit derived from a 4-HB monomer, while comprising a repeat unit (at least one repeat unit) derived from at least one monomer selected from the group consisting of 3-HB monomer, 3-HP monomer, 3-HV monomer, 3-HH monomer, 4-HV monomer, 5-HV monomer, and 6-HH monomer. More specifically, the vaporization promotor for a PBS-based resin may comprise a resin (PHA copolymer) comprising a repeat unit derived from a 3-HB monomer (hereinafter, referred to as "3-HB repeat unit") and a repeat unit derived from a 4-HB monomer (hereinafter, referred to as "4-HB repeat unit"). For example, it may comprise a poly-3-hydroxybutyrate-co-4-hydroxybutyrate (hereinafter, referred to as "P3-HB-co-4-HB") copolymer.

According to an embodiment of the present disclosure, in order to promote the vaporization of a PBS-based resin while increasing the biodegradability of the composition in soil and sea, it may be important to control the content ratio of the 3-HB repeat unit and the 4-HB repeat unit contained in the PHA resin.

For example, in the PHA resin comprising the 3-HB repeat unit and the 4-HB repeat unit, the molar ratio of the 3-HB repeat unit and the 4-HB repeat unit may be 20:80 to 99:1, 30:70 to 99:1, 40:60 to 99:1, 50:50 to 95:5, 50:50 to 94:6, 50:50 to 92:8, 55:45 to 92:8, or 55:45 to 90:10. When the molar ratio of the 3-HB repeat unit and the 4-HB repeat unit satisfies the above range, it may be more advantageous for achieving the biodegradation effect desired in the present disclosure.

Specifically, the content of the 4-HB repeat unit may be 1% by mole to 80% by mole, 2% by mole to 70% by mole, 3% by mole to 60% by mole, 5% by mole to 50% by mole, 8% by mole to 45% by mole, or 10% by mole to 45% by mole, based on the total moles (number of moles) of the 3-HB repeat unit and the 4-HB repeat unit. In addition, the content of the 4-HB repeat unit may be 1% by weight to 80% by weight, 2% by weight to 70% by weight, 3% by weight to 60% by weight, 5% by weight to 50% by weight, 8% by weight to 45% by weight, or 10% by weight to 45% by weight, based on the total weight of the 3-HB repeat unit and the 4-HB repeat unit.

In addition, in a PHA resin comprising at least one 4-HB repeat unit, the crystallinity of the PHA resin may be adjusted depending on the content of the 4-HB repeat unit. That is, the PHA resin may be a PHA copolymer with controlled crystallinity. Specifically, the PHA resin can be classified into a semi-crystalline PHA (scPHA) copolymer or an amorphous PHA (aPHA) copolymer depending on the content of the 4-HB repeat unit.

The PHA resin whose crystallinity is adjusted may be one in which its crystallinity and amorphousness are adjusted as the irregularities are increased in its molecular structure. Specifically, the crystallinity and amorphousness may be determined by the types of the monomers, the ratio of repeat units derived from the monomers, or the types and/or contents of isomers.

Specifically, the PHA resin may be an amorphous PHA (aPHA) copolymer comprising the 4-HB repeat unit. As the vaporization promotor for a PBS-based resin comprises such an amorphous PHA (aPHA) copolymer, the vaporization of the PBS-based resin can be promoted more efficiently.

Meanwhile, the PHA resin may have a glass transition temperature (Tg) of, for example, -45°C to 80°C, -35°C to 80°C, -30°C to 80°C, -25°C to 75°C, -20°C to 70°C, -35°C to 5°C, -25°C to 5°C, -35°C to 0°C, -25°C to 0°C, -30°C to -10°C, -35°C to -15°C, -35°C to -20°C, -20°C to 0°C, -15°C to 0°C, or -15°C to -5°C.

The crystallization temperature (Tc) of the PHA resin, for example, may not be measured or may be, for example, 60°C to 120°C, 70°C to 120°C, 75°C to 120°C, 75°C to 115°C, 75°C to 110°C, or 90°C to 110°C.

The melting temperature (Tm) of the PHA resin, for example, may not be measured or may be, for example, 100°C to 170°C, 105°C to 160°C, 110°C to 150°C, 115°C to 155°C, or 120°C to 140°C.

The PHA resin may have a weight average molecular weight (Mw) of, for example, 10,000 g/mole to 1,200,000 g/mole. Specifically, the weight average molecular weight of the PHA resin may be 50,000 g/mole to 1,200,000 g/mole, 100,000 g/mole to 1,200,000 g/mole, 50,000 g/mole to 1,000,000 g/mole, 100,000 g/mole to 1,000,000 g/mole, 200,000 g/mole to 1,200,000 g/mole, 250,000 g/mole to 1,150,000 g/mole, 300,000 g/mole to 1,100,000 g/mole, 350,000 g/mole to 1,000,000 g/mole, 350,000 g/mole to 950,000 g/mole, 100,000 g/mole to 900,000 g/mole, 200,000 g/mole to 800,000 g/mole, 200,000 g/mole to 700,000 g/mole, 250,000 g/mole to 650,000 g/mole, 200,000 g/mole to 400,000 g/mole, 300,000 g/mole to 800,000 g/mole, 300,000 g/mole to 600,000 g/mole, 500,000 g/mole to 1,200,000 g/mole, 500,000 g/mole to 1,000,000 g/mole 550,000 g/mole to 1,050,000 g/mole, 550,000 g/mole to 900,000 g/mole, or 600,000 g/mole to 900,000 g/mole.

Meanwhile, the composition according to an embodiment of the present disclosure may comprise the PBS-based resin and the vaporization promotor for a PBS-based resin at a specific content ratio. Specifically, the content ratio (weight ratio) of the PBS-based resin and the vaporization promotor for a PBS-based resin may be, for example, 10:90 to 99:1, 20:80 to 98:2, 30:70 to 95:5, 45:55 to 94:6, 50:50 to 93:7, 55:45 to 90:10, 60:40 to 90:10, 65:35 to 90:10, or 70:30 to 90:10. When the content ratio (weight ratio) of the PBS-based resin and the vaporization promotor for a PBS-based resin satisfies the above range, the vaporization of the PBS-based resin can be significantly accelerated.

Additive

The composition according to an embodiment of the present disclosure may further comprise at least one additive selected from the group consisting of antioxidants, compatibilizers, weight agents, nucleating agents, melt strength enhancers, and slip agents.

The content of the additive may be adjusted depending on the desired effect and use of the composition. The content of the additive may be 0.1% by weight or more, 0.5% by weight or more, 1% by weight or more, 1.5% by weight or more, or 2% by weight or more, and 30% by weight or less, 28% by weight or less, 25% by weight or less, 20% by weight or less, 15% by weight or less, 10% by weight or less, 8% by weight or less, or 5% by weight or less, based on the total weight of the composition.

The additive may be a commonly known additive depending on the desired effect and use.

**Mode for the Invention**

Hereinafter, the present disclosure will be described in more detail with reference to the following examples. But the following Examples are intended to illustrate the present disclosure, and the scope of the Examples is not limited thereto only.

**<Example>**

**Example 1**

As shown in Table 1 below, a PBS resin (MITSUBISHI, BioPBS™) and a polyhydroxyalkanoate (PHA) resin (P3-HB-co-4-HB, aPHA) (CJCheilJedang, Korea) as a vaporization promotor for a PBS-based resin were mixed at a weight ratio of 70:30 to prepare a composition.

**Example 2**

As shown in Table 1 below, a PBS resin (MITSUBISHI, BioPBS™) and a polyhydroxyalkanoate (PHA) resin (P3-HB-co-4-HB, aPHA) (CJCheilJedang, Korea) as a vaporization promotor for a PBS-based resin were mixed at a weight ratio of 80:20 to prepare a composition.

**Example 3**

As shown in Table 1 below, a PBS resin (MITSUBISHI, BioPBS™) and a polyhydroxyalkanoate (PHA) resin (P3-HB-co-4-HB, aPHA) (CJCheilJedang, Korea) as a vaporization promotor for a PBS-based resin were mixed at a weight ratio of 90:10 to prepare a composition.

**Comparative Example 1**

As shown in Table 1 below, a composition composed of 100 wt% of a PBS resin (MITSUBISHI, BioPBS™) was prepared.

**Comparative Example 2**

As shown in Table 1 below, a composition composed of 100 wt% of a polyhydroxyalkanoate (PHA) resin (P3-HB-co-4-HB, scPHA) (CJ, Korea) as a vaporization promotor for a PBS-based resin was prepared.

**Comparative Example 3**

As shown in Table 1 below, a poly(butylene adipate-co-terephthalate) (PBAT) resin and a polyhydroxyalkanoate (PHA) resin (P3-HB-co-4-HB, aPHA) (CJ, Korea) as a vaporization promotor for a PBAT resin were mixed at a weight ratio of 70:30 to prepare a composition.

The content and physical properties of the compositions obtained in the Examples and Comparative Examples are summarized in Table 1 below.

[Table 1]

| | Weight ratio of resin:vaporization promotor | Composition and physical properties of vaporization promotor (PHA resin) | | | | |
|---|---|---|---|---|---|---|
| | | 3-HB repeat unit (% by weight) | 4-HB repeat unit (% by weight) | Tg (°C) | Tm (°C) | Tc (°C) |
| Ex. 1 | 70:30 | 66 | 34 | -15 | 103 and 113 | 85 |
| Ex. 2 | 80:20 | 66 | 34 | -16 | 102 and 113 | 83 |
| Ex. 3 | 90:10 | 66 | 34 | -16 | 103.1 and 113 | 85 |
| C. Ex. 1 | 100:0 | - | - | - | - | - |
| C. Ex. 2 | 0:100 | 90 | 10 | -10.2 | 132.5 and 148.3 | 89.9 |
| C. Ex. 3 | 70:30 | 66 | 34 | -5 and -33 | 124 and 164 | 76 |

**Evaluation Example**

**Evaluation Example 1: Degree of vaporization**

The cumulative amount of carbon dioxide generated under aerobic composting conditions in accordance with ISO 14855 was measured to calculate the degree of vaporization ($V_{10w}$).

Specifically, as an evaluation group, each of the composition samples of the Examples and Comparative Examples was taken at 14.3% by weight based on the total dry weight of the composition sample and compost, and a test container containing the mixture obtained by mixing it with compost (Abnexo Co., Ltd.) was prepared. In such an event, the initial moisture content of the compost was measured through LOD moisture measurement using HMA or a drying oven. Additional moisture was added to adjust the final moisture content to 50% to adjust the dry weight. In addition, the mixture was prepared by uniformly mixing 20 g of the dry composition sample (0% moisture content) with 240 g of compost (dry weight: 120 g) with a moisture content of 50% to adjust the ratio of sample:compost = 1:6 in accordance with the ISO 14855 notification regulations.

In addition, as a control group, an inoculum container containing compost alone without the composition sample was prepared.

Thereafter, after 12 weeks at a temperature of 30°C under normal pressure and aerobic conditions, carbon dioxide generated in each container was collected using Respirometer equipment of ECHO and titrated with NIR (near infrared sensor) through a system within the equipment to measure the cumulative amount of carbon dioxide generated from each container.

The degree of vaporization ($V_{10w}$) represented by the following Equation 1 was calculated using the measured cumulative amount of carbon dioxide generated:

[Equation 1]

$$V_{10w} \, (\%) = \frac{(CO_2)_S - (CO_2)_B}{(CO_2)_{THV}} \times 100$$

In Equation 1, $(CO_2)_S$ is the cumulative amount (g) of carbon dioxide ($CO_2$) generated in a test container containing compost and a sample in an amount of 14.3% by weight based on the total dry weight of the sample and the compost, $(CO_2)_B$ is the cumulative amount (g) of carbon dioxide ($CO_2$) generated in an inoculum container containing compost alone, and $(CO_2)_{THV}$ is the theoretical cumulative amount of carbon dioxide ($CO_2$) generated in the test container and represented by the following Equation 2,

[Equation 2]

$$(CO_2)_{THV}\,(g) = Cw \times \frac{44}{12}$$

In Equation 2, Cw is the mass (g) of organic carbon contained in the sample. Specifically, Cw is the content (g) of carbon elements contained in the sample.

**Evaluation Example 2: Degree of improvement in vaporization promotion**

To measure the extent to which the vaporization of the PBS-based resin was promoted by the vaporization promotor for a PBS-based resin, the degree of improvement in vaporization promotion ($\Delta VID_{10W}$) was evaluated.

Specifically, the degree of improvement in vaporization promotion ($\Delta VID_{10W}$) was calculated using the degree of vaporization ($V_{10w}$) in Evaluation Example 1 and the theoretical degree of vaporization ($V_{THV10w}$) of Evaluation Example 1 according to the following Equation 3. The theoretical degree of vaporization ($V_{THV10w}$) was calculated by the following Equation 4:

[Equation 3]

$$\Delta VID_{10W}\,(\%) = V_{10w} - V_{THV10w}$$

In Equation 3, $V_{10w}$ is as defined in Evaluation Example 1, and $V_{THV10w}$ is represented by the following Equation 4,

[Equation 4]

$$V_{THV10w}\,(\%) = 3\% \times \frac{x}{100\%\ by\ weight} + 97\% \times \frac{(100 - x)}{100\%\ by\ weight}$$

In Equation 4, x is the weight percent of the PBS-based resin contained in the composition based on the total weight of the composition.

Meanwhile, when the degree of improvement in vaporization promotion ($\Delta VID_{10W}$) was calculated in Comparative Example 3, x in Equation 4 was the weight percent of the PBAT resin contained in the composition based on the total weight of the composition.

[Table 2]

|  | Total mass of the sample (g) | Mass of organic carbon contained in the sample ($C_w$, g) | $CO_2$ conversion constant (44/12) |
|---|---|---|---|
| Ex. 1 | 20.0 | 11.19 | 3.67 |
| Ex. 2 | 20.0 | 11.19 | 3.67 |
| Ex. 3 | 20.0 | 11.20 | 3.67 |
| C. Ex. 1 | 20.0 | 11.21 | 3.67 |
| C. Ex. 2 | 20.0 | 11.14 | 3.67 |
| C. Ex. 3 | 20.0 | 12.2 | 3.67 |

[Table 3]

| | $(CO_2)_S$ (g) | $(CO_2)_B$ (g) | $(CO_2)_S - (CO_2)_B$ (g) | Theoretical cumulative amount of $CO_2$ generated at 100% conversion $((CO_2)_{THV}, g)$ | Actual degree of vaporization over 12 weeks ($V_{10w}$ in Eq. 1, %) | Theoretical degree of vaporization over 12 weeks ($V_{THV10w}$ in Eq. 4, %) | Degree of improvement in vaporization promotion ($\Delta VID_{10W}$ in Eq. 3, %) |
|---|---|---|---|---|---|---|---|
| Cont'l Ex. 1 (cellulose) | 52.820 | 26.491 | 26.33 | 32.0 | 82.3 | - | - |
| Ex. 1 | 54.544 | 26.491 | 28.05 | 41.0 | 68.4 | 31.2 | 37.2 |
| Ex. 2 | 54.122 | 26.491 | 27.63 | 41.1 | 67.2 | 21.8 | 45.4 |
| Ex. 3 | 46.931 | 26.491 | 20.44 | 41.1 | 49.7 | 12.4 | 37.3 |
| C. Ex. 1 | 27.725 | 26.491 | 1.23 | 41.1 | 3.0 | 3.0 | 0 |
| C. Ex. 2 | 72.548 | 32.971 | 39.58 | 40.8 | 97.0 | 97.0 | 0 |
| C. Ex. 3 | 40.673 | 29.097 | 11.58 | 44.7 | 25.9 | 31.2 | -5.3 |

Referring to Table 3 above, when the cumulative amount of carbon dioxide ($CO_2$) generated over 12 weeks at 30°C was measured, the degree of vaporization ($V_{10w}$) of the compositions of Examples 1 to 3 actually evaluated was all 20% or more. In particular, in Examples 1 to 3 in which a composition comprising a PBS-based resin and a vaporization promotor for a PBS-based resin was used, the degree of improvement in vaporization promotion ($\Delta VID_{10W}$) was significantly enhanced to 30% or more relative to the degree of vaporization ($V_{10w}$) of Comparative Example 1 in which a composition composed of 100% by weight of a PBS-based resin was used.

Meanwhile, in Comparative Example 3 in which a PHA resin as a vaporization promotor for a PBS-based resin according to the present disclosure was used with a PBAT resin, the degree of improvement in vaporization promotion ($\Delta VID_{10W}$) was a negative value, indicating that a PHA resin specifically promotes the vaporization of a PBS-based resin.

**Claims**

1. A composition, which comprises a polybutylene succinate (PBS)-based resin in an amount ranging from 10% by weight to less than 100% by weight based on the total weight of the composition, wherein when the cumulative amount of carbon dioxide ($CO_2$) generated over 12 weeks at 30°C is measured in accordance with ISO 14855, the degree of vaporization ($V_{10w}$) represented by the following Equation 1 is 20% or more:

[Equation 1]

$$V_{10w}\ (\%) = \frac{(CO_2)_S - (CO_2)_B}{(CO_2)_{THV}} \times 100$$

in Equation 1, $(CO_2)_S$ is the cumulative amount (g) of carbon dioxide ($CO_2$) generated in a test container containing compost and a sample in an amount of 14.3% by weight based on the total dry weight of the sample and the compost,

$(CO_2)_B$ is the cumulative amount (g) of carbon dioxide ($CO_2$) generated in an inoculum container containing compost alone, and

$(CO_2)_{THV}$ is the theoretical cumulative amount of carbon dioxide ($CO_2$) generated in the test container and represented by the following Equation 2,

[Equation 2]

$$(CO_2)_{THV}\ (g) = Cw \times \frac{44}{12}$$

in Equation 2, Cw is the mass (g) of organic carbon contained in the sample.

2. The composition of claim 1, which further comprises a vaporization promotor for a polybutylene succinate (PBS)-based resin.

3. The composition of claim 2, wherein the weight ratio of the polybutylene succinate (PBS)-based resin and the vaporization promotor for a polybutylene succinate (PBS)-based resin is 10:90 to 90:10.

4. The composition of claim 2, wherein the degree of improvement in vaporization promotion ($\Delta VID_{10W}$) is 0.1% or more as represented by the following Equation 3:

$$[\text{Equation 3}]$$

$$\Delta VID_{10W} (\%) = V_{10w} - V_{THV10w}$$

in Equation 3, $V_{10w}$ is as defined in claim 1, and $V_{THV10w}$ is represented by the following Equation 4,

$$[\text{Equation 4}]$$

$$V_{THV10w} (\%) = 3\% \times \frac{x}{100\% \; by \; weight} + 97\% \times \frac{(100 - x)}{100\% \; by \; weight}$$

in Equation 4, x is the weight percent of the polybutylene succinate (PBS)-based resin contained in the composition based on the total weight of the composition.

5. The composition of claim 2, wherein the vaporization promotor for a polybutylene succinate (PBS)-based resin satisfies at least one of the following characteristics:

a glass transition temperature (Tg) of -45°C to 80°C,
a crystallization temperature (Tc) of 60°C to 120°C, and
a melting temperature (Tm) of 100°C to 170°C.

6. The composition of claim 2, wherein the polybutylene succinate (PBS)-based resin comprises at least one selected from the group consisting of polybutylene succinate (PBS), polybutylene succinate adipate (PBSA), and polybutylene succinate terephthalate (PBST), and
the vaporization promotor for a polybutylene succinate (PBS)-based resin comprises a resin comprising a repeat unit derived from 4-hydroxybutyrate (4-HB) monomer; and a repeat unit derived from at least one monomer selected from the group consisting of 3-hydroxybutyrate (3-HB), 3-hydroxypropionate (3-HP), 3-hydroxyvalerate (3-HV), 3-hydroxyhexanoate (3-HH), 4-hydroxyvalerate (4-HV), 5-hydroxyvalerate (5-HV), and 6-hydroxyhexanoate (6-HH).

7. The composition of claim 6, wherein the vaporization promotor for a polybutylene succinate (PBS)-based resin comprises a resin comprising the repeat unit derived from a 3-hydroxybutyrate (3-HB) monomer; and the repeat unit derived from a 4-hydroxybutyrate (4-HB) monomer.

8. The composition of claim 7, wherein the resin comprises the repeat unit derived from a 4-hydroxybutyrate (4-HB) monomer in an amount ranging from 1% by mole to 80% by mole based on the total moles of the repeat unit derived from a 3-hydroxybutyrate (3-HB) monomer and the repeat unit derived from a 4-hydroxybutyrate (4-HB) monomer.

9. A vaporization promotor for a polybutylene succinate (PBS)-based resin, which comprises a resin comprising a repeat unit derived from a 3-hydroxybutyrate (3-HB) monomer; and a repeat unit derived from a 4-hydroxybutyrate (4-HB) monomer.

10. The vaporization promotor for a polybutylene succinate (PBS)-based resin of claim 9, wherein the molar ratio of the repeat unit derived from a 3-hydroxybutyrate (3-HB) monomer to the repeat unit derived from a 4-hydroxybutyrate (4-HB) monomer is 40:60 to 99:1.

## INTERNATIONAL SEARCH REPORT

| International application No. |
| --- |
| **PCT/KR2023/004317** |

**A. CLASSIFICATION OF SUBJECT MATTER**

**C08L 67/04**(2006.01)i; **C08G 63/06**(2006.01)i

According to International Patent Classification (IPC) or to both national classification and IPC

**B. FIELDS SEARCHED**

Minimum documentation searched (classification system followed by classification symbols)

C08L 67/04(2006.01); B32B 27/12(2006.01); C08J 5/18(2006.01); C08K 5/3492(2006.01); C08L 67/02(2006.01); C08L 67/03(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리부틸렌숙시네이트(polybutylene succinate, PBS), PHA 수지 (polyhydroxyalkanoate), 3-하이드록시부티레이트(3-HB), 4-하이드록시부티레이트(4-HB), 기화(vaporization)

**C. DOCUMENTS CONSIDERED TO BE RELEVANT**

| Category* | Citation of document, with indication, where appropriate, of the relevant passages | Relevant to claim No. |
| --- | --- | --- |
| X | US 2015-0147929 A1 (METABOLIX, INC.) 28 May 2015 (2015-05-28)<br>See paragraphs [0082] and [0136]; claims 1, 4 and 5; and table 2. | 1-10 |
| A | KR 10-2021-0111185 A (CJ CHEILJEDANG CORPORATION) 10 September 2021 (2021-09-10)<br>See paragraphs [0211] and [0236]-[0238]; claims 1-9; and table 1. | 1-10 |
| A | JP 2021-161435 A (I-COMPOLOGY CORP. et al.) 11 October 2021 (2021-10-11)<br>See entire document. | 1-10 |
| A | US 2011-0189414 A1 (WHITEHOUSE, R. S.) 04 August 2011 (2011-08-04)<br>See entire document. | 1-10 |
| A | US 9994686 B2 (U.S. PACIFIC NONWOVENS INDUSTRY LIMITED) 12 June 2018 (2018-06-12)<br>See entire document. | 1-10 |

☐ Further documents are listed in the continuation of Box C.       ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **10 July 2023** | **10 July 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**14**

| INTERNATIONAL SEARCH REPORT Information on patent family members | | | International application No. PCT/KR2023/004317 | |
|---|---|---|---|---|

| Patent document cited in search report | | | Publication date (day/month/year) | Patent family member(s) | | | Publication date (day/month/year) |
|---|---|---|---|---|---|---|---|
| US | 2015-0147929 | A1 | 28 May 2015 | CN | 104379671 | A | 25 February 2015 |
| | | | | CN | 109265943 | A | 25 January 2019 |
| | | | | CN | 109265943 | B | 10 August 2021 |
| | | | | EP | 2855584 | A1 | 08 April 2015 |
| | | | | EP | 3424990 | A1 | 09 January 2019 |
| | | | | EP | 3424990 | B1 | 05 May 2021 |
| | | | | ES | 2879250 | T3 | 22 November 2021 |
| | | | | US | 10113060 | B2 | 30 October 2018 |
| | | | | US | 2015-0132512 | A1 | 14 May 2015 |
| | | | | US | 9353258 | B2 | 31 May 2016 |
| | | | | WO | 2013-184822 | A1 | 12 December 2013 |
| | | | | WO | 2013-184836 | A1 | 12 December 2013 |
| KR | 10-2021-0111185 | A | 10 September 2021 | None | | | |
| JP | 2021-161435 | A | 11 October 2021 | JP | 2021-160807 | A | 11 October 2021 |
| | | | | JP | 2021-161434 | A | 11 October 2021 |
| | | | | JP | 6944669 | B1 | 06 October 2021 |
| | | | | JP | 7030315 | B2 | 07 March 2022 |
| US | 2011-0189414 | A1 | 04 August 2011 | AR | 071687 | A1 | 07 July 2010 |
| | | | | AR | 072203 | A1 | 11 August 2010 |
| | | | | AR | 072204 | A1 | 11 August 2010 |
| | | | | AR | 072205 | A1 | 11 August 2010 |
| | | | | AU | 2009-322983 | A1 | 30 June 2011 |
| | | | | AU | 2010-234590 | A1 | 03 November 2011 |
| | | | | BR | PI0910459 | A2 | 24 September 2019 |
| | | | | BR | PI0912578 | A2 | 13 October 2015 |
| | | | | BR | PI0915095 | A2 | 27 October 2015 |
| | | | | BR | PI0915095 | A8 | 03 October 2017 |
| | | | | BR | PI0915095 | B1 | 24 April 2019 |
| | | | | BR | PI0915095 | B8 | 01 October 2019 |
| | | | | BR | PI1016046 | A2 | 10 May 2016 |
| | | | | CA | 2720583 | A1 | 22 October 2009 |
| | | | | CA | 2722940 | A1 | 12 November 2009 |
| | | | | CA | 2727016 | A1 | 21 January 2010 |
| | | | | CA | 2745223 | A1 | 10 June 2010 |
| | | | | CA | 2748035 | A1 | 01 July 2010 |
| | | | | CA | 2757617 | A1 | 14 October 2010 |
| | | | | CN | 102027052 | A | 20 April 2011 |
| | | | | CN | 102056985 | A | 11 May 2011 |
| | | | | CN | 102056985 | B | 19 February 2014 |
| | | | | CN | 102112519 | A | 29 June 2011 |
| | | | | CN | 102112519 | B | 13 August 2014 |
| | | | | CN | 102421819 | A | 18 April 2012 |
| | | | | EP | 2285877 | A1 | 23 February 2011 |
| | | | | EP | 2285901 | A1 | 23 February 2011 |
| | | | | EP | 2285901 | B1 | 22 July 2020 |
| | | | | EP | 2291429 | A2 | 09 March 2011 |
| | | | | EP | 2291429 | B1 | 05 June 2013 |
| | | | | EP | 2291430 | A1 | 09 March 2011 |
| | | | | EP | 2370508 | A1 | 05 October 2011 |
| | | | | EP | 2379618 | A1 | 26 October 2011 |

Form PCT/ISA/210 (patent family annex) (July 2022)

**INTERNATIONAL SEARCH REPORT**
Information on patent family members

International application No.

**PCT/KR2023/004317**

| Patent document cited in search report | Publication date (day/month/year) | Patent family member(s) | | | Publication date (day/month/year) |
|---|---|---|---|---|---|
| | | EP | 2417179 | A1 | 15 February 2012 |
| | | EP | 2417179 | B1 | 02 July 2014 |
| | | ES | 2426774 | T3 | 25 October 2013 |
| | | ES | 2503552 | T3 | 07 October 2014 |
| | | ES | 2817544 | T3 | 07 April 2021 |
| | | KR | 10-2011-0008234 | A | 26 January 2011 |
| | | KR | 10-2011-0008312 | A | 26 January 2011 |
| | | KR | 10-2011-0038642 | A | 14 April 2011 |
| | | TW | 201012846 | A | 01 April 2010 |
| | | TW | 201022328 | A | 16 June 2010 |
| | | TW | 201022341 | A | 16 June 2010 |
| | | TW | 201042103 | A | 01 December 2010 |
| | | US | 2011-0124779 | A1 | 26 May 2011 |
| | | US | 2011-0251349 | A1 | 13 October 2011 |
| | | US | 2011-0256398 | A1 | 20 October 2011 |
| | | US | 2011-0293865 | A1 | 01 December 2011 |
| | | US | 2011-0306693 | A1 | 15 December 2011 |
| | | US | 2012-0041109 | A1 | 16 February 2012 |
| | | US | 8487023 | B2 | 16 July 2013 |
| | | US | 8822584 | B2 | 02 September 2014 |
| | | US | 9034989 | B2 | 19 May 2015 |
| | | WO | 2009-129499 | A1 | 22 October 2009 |
| | | WO | 2009-129499 | A8 | 10 December 2009 |
| | | WO | 2009-137058 | A1 | 12 November 2009 |
| | | WO | 2010-008445 | A2 | 21 January 2010 |
| | | WO | 2010-008445 | A3 | 11 March 2010 |
| | | WO | 2010-008447 | A1 | 21 January 2010 |
| | | WO | 2010-065053 | A1 | 10 June 2010 |
| | | WO | 2010-075530 | A1 | 01 July 2010 |
| | | WO | 2010-075530 | A8 | 16 September 2010 |
| | | WO | 2010-118041 | A1 | 14 October 2010 |
| US 9994686 B2 | 12 June 2018 | AU | 2013-378663 | A1 | 27 August 2015 |
| | | AU | 2013-378663 | B2 | 07 December 2017 |
| | | BR | 112015017629 | A2 | 11 July 2017 |
| | | CA | 2891259 | A1 | 21 August 2014 |
| | | CA | 2891259 | C | 29 December 2020 |
| | | EP | 2913362 | A1 | 02 September 2015 |
| | | EP | 2913362 | A4 | 06 July 2016 |
| | | HK | 1214288 | A1 | 22 July 2016 |
| | | JP | 2016-513153 | A | 12 May 2016 |
| | | KR | 10-2015-0120983 | A | 28 October 2015 |
| | | MX | 2015002788 | A | 29 October 2015 |
| | | NZ | 705709 | A | 28 June 2019 |
| | | RU | 2015137592 | A | 23 March 2017 |
| | | RU | 2640243 | C2 | 27 December 2017 |
| | | SG | 11201506376 | UA | 29 September 2015 |
| | | US | 2015-0337094 | A1 | 26 November 2015 |
| | | WO | 2014-124563 | A1 | 21 August 2014 |

Form PCT/ISA/210 (patent family annex) (July 2022)